# EUROPÄISCHE PATENTSCHRIFT

(11) **EP 4 044 788 B1**
(45) Veröffentlichungstag und Bekanntmachung des Hinweises auf die Patenterteilung: **25.03.2026**
(21) Anmeldenummer: 20789866.9
(22) Anmeldetag: 01.10.2020
(51) Int. Cl.: A01C 7/18, A01C 7/10

(54) **VERFAHREN ZUM BETREIBEN EINER PORTIONIEREINRICHTUNG**
METHOD FOR OPERATING A PORTIONING DEVICE
PROCÉDÉ PERMETTANT DE FAIRE FONCTIONNER UN DISPOSITIF DE CRÉATION DE PORTIONS

(30) Priorität: 17.10.2019 DE 102019128037
(43) Veröffentlichungstag der Anmeldung: 24.08.2022
(73) Patentinhaber: Amazonen-Werke H. Dreyer SE & Co. KG, 49205 Hasbergen (DE)
(72) Erfinder: HILBERT, Florenz, 48282 Emsdetten (DE); JOHANNABER, Stefan Jan, 49536 Lienen (DE); TECKEMEYER, Stephan, 49504 Lotte (DE); TRENTMANN, Markus, 49134 Wallenhorst (DE); WESSELS, Thomas, 49080 Osnabrück (DE)
(86) Internationale Anmeldenummer: PCT/EP2020/077441
(87) Internationale Veröffentlichungsnummer: WO 2021/073880

(56) Entgegenhaltungen:
- EP-A1- 3 127 414
- DE-A1- 102015 114 145
- DE-B3- 102013 215 183

## Beschreibung

Die Erfindung betrifft ein Verfahren zum Betreiben einer Portioniereinrichtung nach dem Oberbegriff des Patentanspruchs 1, eine Portioniereinrichtung für Granulat- oder Saatkörner nach dem Oberbegriff des Patentanspruchs 11 und eine Landmaschine nach dem Oberbegriff des Patentanspruchs 14.

Aus der Druckschrift DE 10 2013 215 183 B3 ist ein Verfahren zur Dosierung von körnigem Gut und eine Dosiervorrichtung für körniges Gut bekannt.

Bei der Aussaat einiger Pflanzensorten ist es erforderlich, Granulat- oder Saatkörner vor dem Ablegen auf eine landwirtschaftliche Nutzfläche zu einer Kornportion zusammenzuführen, sodass die Granulat- oder Saatkörner portioniert abgelegt werden können. Granulat können Dünger und/oder andere Pflanzenschutzmittel, wie beispielsweise Insektizide oder Fungizide sein. Zum Portionieren der Granulat- oder Saatkörner werden Portioniereinrichtungen eingesetzt, deren Betrieb bisher jedoch aufwendig ist und zu einer unpräzisen Abgabe der Granulat- oder Saatgutportionen führt.

Es hat sich herausgestellt, dass Portioniereinrichtungen mit einem rotatorisch angetriebenen Portionierelement eine vergleichsweise präzise Steuerung der Portionsbildung erlauben und gleichzeitig eine hohe Ablagegenauigkeit ermöglichen. Bei entsprechenden Portioniereinrichtungen führt das Portionierelement während einer Rotationsbewegung in einer Portionierkammer die sich in der Portionierkammer befindlichen Granulat- oder Saatkörner zu einer Kornportion zusammen, sodass die Granulat- oder Saatkörner portionsweise auf eine landwirtschaftliche Nutzfläche abgelegt werden können.

Bei der Verwendung einer entsprechenden Portioniereinrichtung ist es jedoch bisher nicht möglich, spezifische Betriebszustände der Portioniereinrichtung während des Betriebs zu erfassen. Da der Betriebszustand entsprechender Portioniereinrichtungen folglich bisher nicht überwacht werden kann, scheidet deren Verwendung in einer Vielzahl von Landmaschinen aus.

Die der Erfindung zugrundeliegende Aufgabe besteht somit darin, eine Überwachung des Betriebs einer Portioniereinrichtung für Granulat- oder Saatkörner zu ermöglichen.

Die Aufgabe wird gelöst durch ein Verfahren der eingangs genannten Art, wobei das Auswerten des Antriebsmoments des Rotationsantriebs oder des mit dem Antriebsmoment des Rotationsantriebs im Zusammenhang stehenden Parameters im Rahmen des erfindungsgemäßen Verfahrens zum Erfassen der durch die Portioniereinrichtung während eines Ausbringzeitraums portionierten Granulat- oder Saatgutmenge erfolgt.

Die Erfindung macht sich die Erkenntnis zunutze, dass durch das Auswerten des Antriebsmoments des Rotationsantriebs oder des mit dem Antriebsmoment des Rotationsantriebs im Zusammenhang stehenden Parameters Drehmomentverläufe und/oder Drehmomentmuster bzw. Parameterverläufe und/oder Parametermuster ermittelt werden können. Die Drehmomentverläufe und/oder die Drehmomentmuster bzw. die Parameterverläufe und/oder die Parametermuster können spezifischen Betriebszuständen zugeordnet werden. Somit erlaubt das Auswerten des Antriebsmoments des Rotationsantriebs oder des mit dem Antriebsmoment des Rotationsantriebs im Zusammenhang stehenden Parameters eine Überwachung des Betriebs der Portioniereinrichtung. Spezifische Betriebszustände der Portioniereinrichtung können auch ermittelt werden, indem Über- und/oder Unterschreitungen von Antriebsmomentgrenzwerten bzw. Parametergrenzwerten durch die Auswerteeinrichtung überwacht werden. Außerdem können in den Drehmomentverläufen bzw. den Parameterverläufen unterschiedliche Portionierzustände erfasst werden. Während der Portionierung, also während der Rotationsbewegung des Portionierelements, werden beispielsweise die folgenden Portionierzustände durchlaufen:
i) Einsammeln der in einem Bereich der Portionierkammer befindlichen Granulat- oder Saatkörner durch das rotierende Portionierelement zum Erzeugen einer Kornportion;
ii) Führen der eine Kornportion bildenden eingesammelten Granulat- oder Saatkörner über einen Drehwinkelbereich mittels des Portionierelements;
iii) Abgeben der erzeugten Kornportion durch das Portionierelement;
iv) Ausführen einer freien Drehbewegung des Portionierelements ohne Interaktion mit Granulat- oder Saatkörnern.

Die Portionierkammer befindet sich vorzugsweise in einem Gehäuse der Portioniereinrichtung. Die Auswerteeinrichtung ist vorzugsweise eine elektronische Datenverarbeitungseinrichtung, welche Bestandteil der Portioniereinrichtung oder einer Landmaschine sein kann. Vorzugsweise erfolgt auch ein Erfassen des Antriebsmoments des Rotationsantriebs oder des mit dem Antriebsmoment des Rotationsantriebs im Zusammenhang stehenden Parameters durch die Auswerteeinrichtung.

Das erfindungsgemäße Verfahren wird dadurch vorteilhaft weitergebildet, dass das Erfassen eines spezifischen Betriebszustands der Portioniereinrichtung durch das Erfassen eines oder mehrerer Verlaufsmuster des Antriebsmoments des Rotationsantriebs oder des mit dem Antriebsmoment des Rotationsantriebs im Zusammenhang stehenden Parameters erfolgt. Das eine oder die mehreren Verlaufsmuster des Antriebsmoments des Rotationsantriebs oder des mit dem Antriebsmoment im Zusammenhang stehenden Parameters beziehen sich vorzugsweise auf den zeitlichen Antriebsmomentenverlauf bzw. auf den zeitlichen Parameterverlauf. Alternativ oder zusätzlich erfolgt das Erfassen eines spezifischen Betriebszustands der Portioniereinrichtung über das Erfassen einer oder mehrerer Grenzwertüber- und/oder -unterschreitungen des Antriebsmoments des Rotationsantriebs oder des mit dem Antriebsmoment des Rotationsantriebs im Zusammenhang stehenden Parameters. Der Grenzwert kann dabei ein Antriebsmomentgrenzwert oder ein Parametergrenzwert sein. Beispielsweise kann die Überschreitung eines Antriebsmomentgrenzwertes darauf hinweisen, dass das Portionierelement blockiert oder die Drehbewegung des Portionierelements beeinträchtigt wird. Die Unterschreitung eines Drehmomentgrenzwertes kann darauf hinweisen, dass sich keine oder nicht ausreichend viele Granulat- oder Saatkörner in der Portionierkammer befinden, sodass keine oder lediglich zu kleine Kornportionen während des Betriebs der Portioniereinrichtung gebildet werden.

Das erfindungsgemäße Verfahren wird ferner dadurch vorteilhaft weitergebildet, dass beim Auswerten des Antriebsmoments des Rotationsantriebs oder des mit dem Antriebsmoment des Rotationsantriebs im Zusammenhang stehenden Parameters ein Antriebsmomentenverlauf oder ein Parameterverlauf über einen Drehwinkelbereich, insbesondere über zumindest eine Umdrehung, des Portionierelements mit einem Sollverlauf verglichen wird. Wenn der Antriebsmomentenverlauf oder der Parameterverlauf von dem Sollverlauf über ein Toleranzmaß hinaus abweicht, kann davon ausgegangen werden, dass die Portioniereinrichtung nicht ordnungsgemäß arbeitet. Wenn der Antriebsmomentenverlauf oder der Parameterverlauf dem Sollverlauf entspricht, kann davon ausgegangen werden, dass die Portioniereinrichtung ordnungsgemäß arbeitet.

In einer anderen Ausführungsform des erfindungsgemäßen Verfahrens erfolgt das Auswerten des Antriebsmoments des Rotationsantriebs oder des mit dem Antriebsmoment des Rotationsantriebs im Zusammenhang stehenden Parameters zum Erfassen einer Blockade des Portionierelements und/oder zum Erfassen einer Beeinträchtigung der Rotationsbewegung des Portionierelements. Eine Blockade des Portionierelements kann beispielsweise auftreten, wenn sich ein oder mehrere Fremdkörper in der Portionierkammer derart zwischen dem Portionierelement und der Bewandung der Portionierkammer verkeilen, dass eine Drehbewegung des Portionierelements unterbunden wird. Eine Beeinträchtigung der Rotationsbewegung des Portionierelements kann beispielsweise durch eine Verschmutzung der Portionierkammer verursacht werden. Wenn eine Blockade des Portionierelements und/oder eine Beeinträchtigung der Rotationsbewegung des Portionierelements erfasst wird, kann beispielsweise die Reinigung der Portionierkammer erforderlich sein.

Das erfindungsgemäße Verfahren wird ferner dadurch vorteilhaft weitergebildet, dass das Auswerten Antriebsmoments des Rotationsantriebs oder des mit dem Antriebsmoment des Rotationsantriebs im Zusammenhang stehenden Parameters zum Erfassen des Verschmutzungszustands der Portionierkammer erfolgt. Auf diese Weise kann eine Verschmutzungsüberwachung der Portionierkammer umgesetzt werden. Die Verschmutzungsüberwachung erlaubt eine bedarfsorientierte Reinigung der Portionierkammer. Somit kann vermieden werden, dass die Portionierkammer in regelmäßigen Reinigungsintervallen gereinigt wird, ohne dass dies erforderlich ist.

In einer anderen Ausführungsform des erfindungsgemäßen Verfahrens erfolgt das Auswerten des Antriebsmoments des Rotationsantriebs oder des mit dem Antriebsmoment des Rotationsantriebs im Zusammenhang stehenden Parameters zum Erfassen von Kornmengen der erzeugten Kornportionen und/oder Portionsgrößen der erzeugten Kornportionen. Das Antriebsmoment des Rotationsantriebs oder der mit dem Antriebsmoment des Rotationsantriebs im Zusammenhang stehende Parameter steigt beispielsweise mit zunehmender Granulat- bzw. Saatgutmenge einer Kornportion bzw. mit steigender Portionsgröße an. Wenn die Granulat- bzw. Saatgutmenge der erzeugten Kornportionen und/oder die Portionsgröße der erzeugten Kornportionen von erwarteten Werten abweicht, kann die Kornförderung vor der Portioniereinrichtung oder die Kornportionsförderung hinter der Portioniereinrichtung beeinträchtigt sein. Beispielsweise kann eine Förderleitung verstopft oder verschmutzt sein. Wenn die Kornförderung vor der Portioniereinrichtung beeinträchtigt ist, gelangen nicht ausreichend viele Granulat- oder Saatkörner in die Portionierkammer, sodass das Antriebsmoment des Rotationsantriebs oder der mit dem Antriebsmoment des Rotationsantriebs im Zusammenhang stehende Parameter abfällt. Wenn die Kornportionsförderung hinter der Portioniereinrichtung beeinträchtigt ist, verbleiben Kornportionen ganz oder teilweise in der Portionierkammer, sodass das Antriebsmoment des Rotationsantriebs oder der mit dem Antriebsmoment des Rotationsantriebs im Zusammenhang stehende Parameter ansteigt. Es kann ferner die Gleichmäßigkeit der von der Portioniereinrichtung erzeugten Kornportionen überwacht werden. Somit kann überwacht bzw. kontrolliert werden, ob die Portionsabgabe während der Fahrt auf der landwirtschaftlichen Nutzfläche in Längsrichtung mengenmäßig homogen ist. Wenn mehrere oder sämtliche Portioniereinrichtungen der Landmaschine mit dem Verfahren betrieben werden, kann überprüft bzw. kontrolliert werden, ob in allen Reihen eine Kornförderung und Kornablage erfolgt. Außerdem können die Granulat- bzw. Saatgutmengen bzw. die Portionsgrößen der von den unterschiedlichen Portioniereinrichtungen erzeugten Kornportionen überwacht und miteinander verglichen werden. Somit kann überwacht bzw. kontrolliert werden, ob die Kornportionsabgabe während der Fahrt auf der landwirtschaftlichen Nutzfläche in Querrichtung mengenmäßig homogen ist. Falls sich die von den einzelnen Portioniereinrichtungen erzeugten Kornportionen voneinander unterschieden, kann beispielsweise die Korndosierung an einer vorgeschalteten Korndosiereinrichtung, beispielsweise an einem Verteilkopf, angepasst werden. Hierzu können beispielsweise die Öffnungs- und Schließzyklen von Verteilerklappen angepasst werden.

Erfindungsgemäß erfolgt das Auswerten des Antriebsmoments des Rotationsantriebs oder des mit dem Antriebsmoment des Rotationsantriebs im Zusammenhang stehenden Parameters zum Erfassen der durch die Portioniereinrichtung während eines Ausbringzeitraums portionierten Granulat- oder Saatgutmenge. Unter der Annahme, dass die erzeugten Kornportionen auch auf der landwirtschaftlichen Nutzfläche abgelegt werden, kann somit die Granulat- oder Saatgutmenge berechnet werden, welche in einer Reihe während des Ausbringzeitraums ausgebracht wurde. Unter Berücksichtigung sämtlicher Portioniereinrichtungen einer Landmaschine kann dann die während des Ausbringzeitraums ausgebrachte Gesamtmenge an Granulat bzw. Saatgut bestimmt werden. Ein Abdrehen der Landmaschine ist somit nicht länger erforderlich. Außerdem kann die über die Kornportionen berechnete Kornmenge mit der an einer zentralen oder dezentralen Dosiereinrichtung abgedrehten Granulat- bzw. Saatgutmenge verglichen werden.

In einer weiteren Ausführungsform des erfindungsgemäßen Verfahrens wird der Rotationsantrieb des Portionierelements durch eine Steuerungseinrichtung selbsttätig unterbrochen, wenn ein spezifischer Betriebszustand der Portioniereinrichtung erfasst wird. Alternativ oder zusätzlich wird die Ausgabe eines akustischen oder optischen Hinweises durch die Steuerungseinrichtung selbsttätig veranlasst, wenn ein spezifischer Betriebszustand der Portioniereinrichtung erfasst wird. Durch das selbsttätige Unterbrechen des Rotationsantriebs des Portionierelements und/oder das selbsttätige Veranlassen der Ausgabe eines akustischen oder optischen Hinweises kann eine Beschädigung der Portioniereinrichtung während des Betriebs vermieden werden. Beispielsweise wird der Rotationsantrieb des Portionierelements unterbrochen oder es wird die Ausgabe eines akustischen oder optischen Hinweises veranlasst, wenn eine Blockade des Portionierelements und/oder eine Beeinträchtigung der Rotationsbewegung des Portionierelements erfasst wird.

Darüber hinaus ist ein erfindungsgemäßes Verfahren vorteilhaft, bei welchem das Auswerten des Antriebsmoments des Rotationsantriebs oder des mit dem Antriebsmoment des Rotationsantriebs im Zusammenhang stehenden Parameters zum Ermitteln von Abgabezeitpunkten der erzeugten Kornportionen und/oder einer verbleibenden Förderdauer der erzeugten Kornportionen bis zur Ablage auf die landwirtschaftliche Nutzfläche erfolgt. Wenn eine erzeugte Kornportion durch das Portionierelement abgegeben wird, erfolgt ein abrupter Abfall des Antriebsmoments des Rotationsantriebs oder des mit dem Antriebsmoment des Rotationsantriebs im Zusammenhang stehenden Parameters. Über die Auswertung des Antriebsmoments des Rotationsantriebs oder des mit dem Antriebsmoment des Rotationsantriebs im Zusammenhang stehenden Parameters kann auch die Bewegungs- und/oder Fördergeschwindigkeit der Kornportionen bei Austritt aus der Portionierkammer oder aus der Portioniereinrichtung ermittelt werden.

Ferner ist ein erfindungsgemäßes Verfahren verteilhaft, bei dem zumindest ein Kalibriervorgang, bei dem keine Granulat- oder Saatkörner in die Portionierkammer eingespeist und somit nicht mittels des Portionierelementes zu einer Kornportion zusammengeführt werden, durchgeführt wird. Infolge dieser Ausführungsform kann das Antriebsmoment des Rotationsantriebes im Leerlauf aufgenommen und zur Auswertung betrachtet werden. Das Leerlaufantriebsmoment kann temeperaturabhängig sein und/oder sich im Laufe der Zeit, bspw. durch zunehmende Verschmutzung, verändern. Infolge dieser Maßnahme wird die Interpretationsgenauigkeit verbessert durch das Zugrundelegen des tatsächlich auftretenden Antriebsmoments aus dem Kalibriervorgang.

In einer weiteren Ausführungsform des erfindungsgemäßen Verfahrens ist der Rotationsantrieb ein elektrischer Rotationsantrieb und der zum Erfassen eines spezifischen Betriebszustands der Portioniereinrichtung ausgewertete und mit dem Antriebsmoment des Rotationsantriebs im Zusammenhang stehende Parameter ist die Stromaufnahme des Rotationsantriebs. Über die Stromaufnahme des elektrischen Rotationsantriebs können Rückschlüsse auf das an dem Portionierelement anliegende Drehmoment gezogen werden. Verläufe und Muster der Stromaufnahme können somit spezifischen Betriebszuständen der Portioniereinrichtung zugeordnet werden. Auch die Über- und/oder Unterschreitung von Stromaufnahmegrenzwerten kann charakteristisch für spezifische Betriebszustände der Portioniereinrichtung sein. In dem Verlauf der Stromaufnahme des Rotationsantriebs können auch die zuvor beschriebenen unterschiedlichen Portionierzustände erfasst werden. Vorzugsweise erfolgt auch ein Erfassen der Stromaufnahme des elektrischen Rotationsantriebs durch die Auswerteeinrichtung. Der elektrische Rotationsantrieb kann ein Elektromotor sein.

Die der Erfindung zugrundeliegende Aufgabe wird ferner durch eine Portioniereinrichtung der eingangs genannten Art gelöst, wobei die Auswerteeinrichtung der erfindungsgemäßen Portioniereinrichtung dazu eingerichtet ist, das Antriebsmoment des Rotationsantriebs oder den mit dem Antriebsmoment des Rotationsantriebs im Zusammenhang stehenden Parameter zum Erfassen der durch die Portioniereinrichtung während eines Ausbringzeitraums portionierten Granulat- oder Saatgutmenge auszuwerten.

In einer bevorzugten Weiterbildung der erfindungsgemäßen Portioniereinrichtung ist der Rotationsantrieb ein elektrischer Rotationsantrieb und die Auswerteeinrichtung ist dazu eingerichtet, die Stromaufnahme des Rotationsantriebs zum Erfassen eines spezifischen Betriebszustands der Portioniereinrichtung auszuwerten. Die Stromaufnahme des Rotationsantriebs stellt somit den mit dem Antriebsmoment des Rotationsantriebs im Zusammenhang stehenden Parameter dar.

Darüber hinaus ist eine erfindungsgemäße Portioniereinrichtung vorteilhaft, welche dazu eingerichtet ist, gemäß dem Verfahren nach einer der vorstehend beschriebenen Ausführungsformen betrieben zu werden. Hinsichtlich der Vorteile und Modifikationen einer solchen Portioniereinrichtung wird auf die Vorteile und Modifikationen des erfindungsgemäßen Verfahrens verwiesen.

Die der Erfindung zugrundeliegende Aufgabe wird ferner durch eine Landmaschine der eingangs genannten Art gelöst, wobei eine, mehrere oder sämtliche Portioniereinrichtungen der erfindungsgemäßen Landmaschine nach einer der vorstehend beschriebenen Ausführungsformen ausgebildet sind und/oder dazu eingerichtet sind, gemäß dem Verfahren nach einer der vorstehend beschrieben Ausführungsformen betrieben zu werden. Hinsichtlich der Vorteile und Modifikationen der erfindungsgemäßen Landmaschine wird auf die Vorteile und Modifikationen der erfindungsgemäßen Portioniereinrichtung und die Vorteile und Modifikationen des erfindungsgemäßen Verfahrens verwiesen.

Die Landmaschine kann eine Sämaschine, eine Sämaschine mit einer Granulatablageeinrichtung oder eine Granulatausbringmaschine ohne Säfunktion sein.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Portioniereinrichtung in einer perspektivischen Darstellung;
- Fig. 2: die in der Fig. 1 abgebildete Portioniereinrichtung in einer seitlichen Schnittdarstellung; und
- Fig. 3: mehrere während des Betriebs einer erfindungsgemäßen Portioniereinrichtung aufgezeichnete Verläufe der Stromaufnahme eines elektrischen Rotationsantriebs der Portioniereinrichtung.

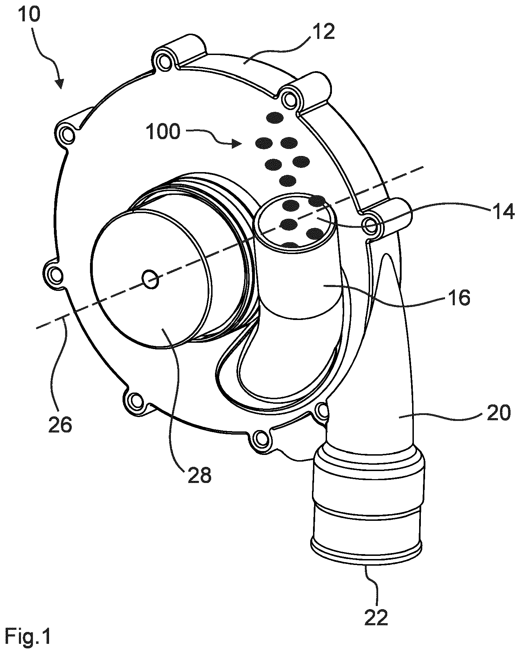

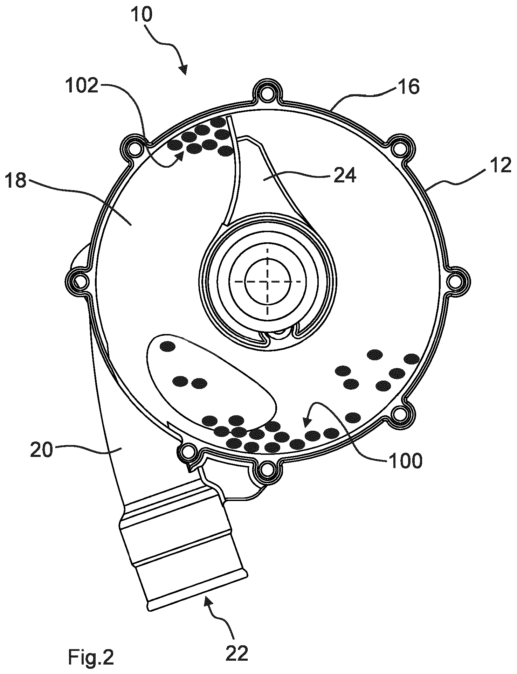

Die Fig. 1 und 2 zeigen eine als Granulatportionierer ausgebildete Portioniereinrichtung 10. Die Portioniereinrichtung 10 dient zum Erzeugen von Granulatportionen aus einem im Wesentlichen kontinuierlichen Granulatstrom, welcher der Portioniereinrichtung 10 zugeführt wird.

Die Portioniereinrichtung 10 weist ein mehrteiliges Gehäuse 12 auf. Das Gehäuse 12 umfasst einen abnehmbaren Gehäusedeckel, wobei der Gehäusedeckel eine in dem Gehäuse 12 befindliche Portionierkammer 18 abdeckt.

Das Gehäuse 12 umfasst außerdem einen Einlasskanal 16, wobei der Einlasskanal 16 eine Einlassöffnung 14 für Granulatkörner 100 aufweist. Die Granulatkörner 100 können über eine mit den Granulatkörnern 100 beladene Luftströmung in die Portioniereinrichtung 10 hineintransportiert werden oder unter Einwirkung der Schwerkraft in die Portioniereinrichtung 10 hineinfallen.

Die innerhalb der Portionierkammer 18 gebildeten Kornportionen 102 können über den Auslasskanal 20 und die Auslassöffnung 22 aus dem Gehäuse 12 der Portioniereinrichtung 10 ausgeleitet werden.

Innerhalb der Portionierkammer 18 ist ein als Portionierflügel ausgebildetes Portionierelement 24 angeordnet, welches von einem elektrischen Rotationsantrieb 28 rotatorisch angetrieben wird. Der elektrische Rotationsantrieb 28 ist ein Elektromotor. Das Portionierelement 24 ist dazu eingerichtet, durch eine Rotationsbewegung um die Rotationsachse 26 in der Portionierkammer 18 befindliche Granulatkörner 100 zu einer Granulatportion 102 zusammenzuführen.

Der elektrische Rotationsantrieb 28 ist mit einer nicht dargestellten Auswerteeinrichtung verbunden, welche dazu eingerichtet ist, die Stromaufnahme I zum Erfassen eines spezifischen Betriebszustands der Portioniereinrichtung 10 auszuwerten. Die Auswerteeinrichtung ist eine elektronische Datenverarbeitungseinrichtung, welche Bestandteil der Portioniereinrichtung 10 oder einer Landmaschine, in der die Portioniereinrichtung 10 verbaut ist, sein kann. Über die Auswerteeinrichtung wird auch die Stromaufnahme I des elektrischen Rotationsantriebs 28 während des Betriebs der Portioniereinrichtung 10 erfasst.

Über die Stromaufnahme I des elektrischen Rotationsantriebs 28 können Rückschlüsse auf das an dem Portionierelement 24 anliegende Drehmoment gezogen werden. Drehmomentverläufe und somit auch Stromaufnahmeverläufe 30a-30e können spezifischen Betriebszuständen der Portioniereinrichtung 10 zugeordnet werden, sodass eine Überwachung des Betriebs der Portioniereinrichtung 10 ermöglicht wird.

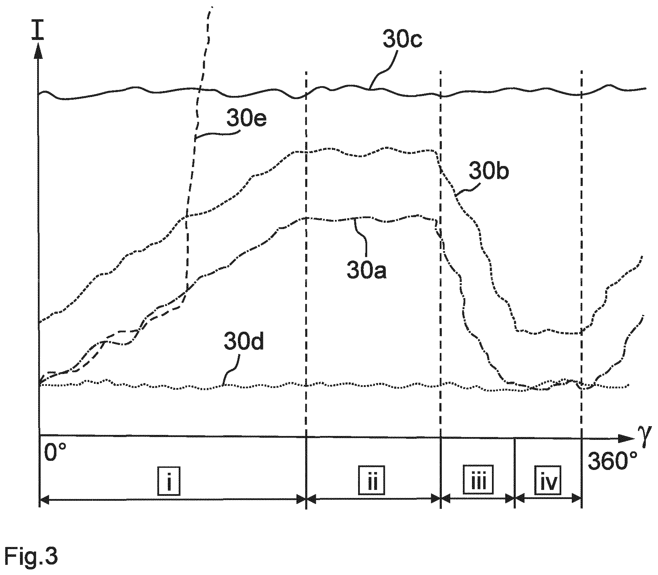

Die Fig. 3 zeigt fünf Stromaufnahmeverläufe 30a-30e, welche während des Betriebs einer Portioniereinrichtung 10 aufgezeichnet und ausgewertet wurden. In der Darstellung ist die Stromaufnahme I eines elektrischen Rotationsantriebs 28 der Portioniereinrichtung 10 über den Drehwinkel φ eines Portionierelements 24 der Portioniereinrichtung 10 aufgetragen. Die dargestellten Stromaufnahmeverläufe 30a-30e betreffen die Stromaufnahme I des elektrischen Rotationsantriebs 28 während einer Umdrehung des Portionierelements 24, also über einen Drehwinkel φ von 360°.

Der Stromaufnahmeverlauf 30a bezieht sich auf eine ordnungsgemäß arbeitende Portioniereinrichtung 10. Aus dem Stromaufnahmeverlauf 30a lassen sich unterschiedliche Portionierzustände i-iv ableiten.

In einem ersten Drehwinkelbereich liegt der Portionierzustand i vor, bei welchem die in einem Bereich der Portionierkammer 18 befindlichen Granulatkörner 100 zum Erzeugen einer Kornportion 102 durch das rotierende Portionierelement 24 eingesammelt werden. Durch die steigende Anzahl von eingesammelten Granulatkörnern 100 steigt der Drehwiderstand am Portionierelement 24 an. Hieraus resultiert auch ein im Wesentlichen konstanter Anstieg des Antriebsmoments und somit auch der Stromaufnahme I des elektrischen Rotationsantriebs 28.

Der sich anschließende Portionierzustand ii betrifft das Führen der eine Kornportion 102 bildenden eingesammelten Granulatkörner 100 über einen Drehwinkelbereich mittels des Portionierelements 24. Innerhalb dieses Drehwinkelbereichs werden keine oder lediglich eine geringe Anzahl von neuen Granulatkörnern 100 von dem Portionierelement 24 eingesammelt. Folglich bleiben das Antriebsmoment und somit auch die Stromaufnahme I des elektrischen Rotationsantriebs 28 im Wesentlichen konstant.

Im Anschluss daran erfolgt im Portionierzustand iii die Abgabe der erzeugten Kornportion 102 durch das Portionierelement 24. Durch die Abgabe der erzeugten Kornportion 102 nimmt der Drehwiderstand am Portionierelement 24 abrupt ab. Hieraus resultiert auch ein deutlicher Abfall des Antriebsmoments und somit auch der Stromaufnahme I des elektrischen Rotationsantriebs 28.

Nachdem die erzeugte Kornportion 102 angegeben wurde, führt das Portionierelement 24 in dem Portionierzustand iv eine freie Drehbewegung ohne Interaktion mit Granulatkörnern 100 aus. Da keine Granulatkörner vor dem Portionierelement 24 hergeschoben werden, ist der Drehwiderstand am Portionierelement 24 minimal. Folglich befindet sich auch das Antriebsmoment und die Stromaufnahme I des elektrischen Rotationsantriebs 28 auf einem niedrigen konstanten Niveau.

Während des Betriebs der Portioniereinrichtung 10 werden die erfassten Stromaufnahmeverläufe 30a-30e von der Auswerteeinrichtung mit einem Sollverlauf verglichen, um auf diese Weise festzustellen, ob die Portioniereinrichtung 10 ordnungsgemäß arbeitet. Der Sollverlauf entspricht vorliegend im Wesentlichen dem Stromaufnahmeverlauf 30a.

Der Stromaufnahmeverlauf 30b wurde während des Betriebs der Portioniereinrichtung aufgezeichnet, wobei die Portionierkammer 18 der Portioniereinrichtung 10 zu diesem Zeitpunkt verschmutzt war. Die Stromaufnahme I des elektrischen Rotationsantriebs 28 ist aufgrund der Verschmutzung der Portionierkammer 18 erhöht, wobei das Verlaufsmuster mit Ausnahme einer im Wesentlichen konstanten Werteabweichung dem Verlaufsmuster des Stromaufnahmeverlaufs 30a entspricht. Durch ein Auswerten des Stromaufnahmeverlaufs 30b kann somit festgestellt werden, dass eine Beeinträchtigung der Rotationsbewegung des Portionierelements 24 vorliegt, welche zu einer erhöhten Stromaufnahme I an dem elektrischen Rotationsantrieb 28 führt. Da das Verlaufsmuster des Stromaufnahmeverlaufs 30b jedoch die unterschiedlichen Portionierzustände i-iv erkennen lässt, kann davon ausgegangen werden, dass die Portionsbildung in der Portionierkammer 18 weiterhin ordnungsgemäß erfolgt.

Der Stromaufnahmeverlauf 30c wurde während des Betriebs der Portioniereinrichtung 10 aufgezeichnet, wobei während der Aufzeichnung eine Verstopfung der Portionierkammer 18 vorlag. Durch eine Auswertung der Stromaufnahme I des elektrischen Rotationsantriebs 28 lässt sich feststellen, dass diese weit oberhalb von zu erwartenden Sollwerten liegt. Darüber hinaus können aus dem Verlaufsmuster des Stromaufnahmeverlaufs 30c keine Portionierzustände mehr abgeleitet werden. Dies lässt darauf schließen, dass eine Verstopfung der Portionierkammer 18 vorliegt.

Der Stromaufnahmeverlauf 30d wurde ebenfalls während des Betriebs der Portioniereinrichtung 10 aufgezeichnet und ausgewertet, wobei während dieses Zeitraums eine Zuführleitung vor der Portioniereinrichtung 10 verstopft war, sodass keine Granulatkörner 100 in die Portionierkammer 18 der Portioniereinrichtung 10 gelangen konnten. Der Stromaufnahmeverlauf 30d kann ebenfalls aus einem Kalibriervorgang, bei dem keine Granulat- oder Saatkörner 100 in die Portionierkammer 18 eingespeist und somit nicht mittels des Portionierelementes 24 zu einer Kornportion zusammengeführt werden, resultieren. Ein solcher Kalibriervorgang dient der Ermittlung des Antriebsmoments im Leerlauf. Kalibriervorgänge wernde zweckmäßiger Weise vor Beginn des eigentlichen Arbeitsbetriebes und/oder wiederholt während des Arbeitsbetriebes, vorzugsweise während die Abgabe von Kornportionen nicht erforderlich ist, wie bspw. am Vorgewende, durchgeführt. Da das Portionierelement 24 während der Rotationsbewegung keine Widerstände durch die Mitnahme von Granulatkörnern 100 erfährt, ist die Stromaufnahme I des elektrischen Rotationsantriebs 28 während der gesamten Umdrehung auf einem im Wesentlichen konstanten niedrigen Niveau. Da sich keine Granulatkörner 100 in der Portionierkammer 18 befinden, kann das Portionierelement 24 im Wesentlichen frei drehen, sodass sich das dargestellte niedrige Stromaufnahmeniveau ergibt. Durch das Auswerten des Stromaufnahmeverlaufs 30d kann also festgestellt werden, dass keine Granulatkörner 100 in die Portionierkammer 18 gelangen.

Der Stromaufnahmeverlauf 30e wurde ebenfalls während des Betriebs der Portioniereinrichtung 10 aufgezeichnet. Der abrupte Anstieg der Stromaufnahme I des elektrischen Rotationsantriebs 28 der Portioniereinrichtung 10 zeigt, dass eine Blockade oder Verklemmung des Portionierelements 24 vorliegt. Eine Blockade kann beispielsweise durch eine Verklemmung des Portionierelements 24 aufgrund eines sich in der Portionierkammer 18 befindlichen Fremdkörpers hervorgerufen werden.

Wenn die Auswerteeinrichtung Stromaufnahmeverläufe 30b-30e identifiziert, welche von einem Sollverlauf abweichen, kann eine Steuerungseinrichtung den elektrischen Rotationsantrieb 28 deaktivieren oder die Ausgabe eines akustischen oder optischen Hinweises veranlassen, sodass der Maschinenführer über den festgestellten Betriebszustand der Portioniereinrichtung 10 informiert wird. Dieser kann dann entsprechende Gegenmaßnahmen einleiten, beispielsweise die Reinigung der Portionierkammer 18.

### Bezugszeichenliste

- 10: Portioniereinrichtung
- 12: Gehäuse
- 14: Einlassöffnung
- 16: Einlasskanal
- 18: Portionierkammer
- 20: Auslasskanal
- 22: Auslassöffnung
- 24: Portionierelement
- 26: Rotationsachse
- 28: Rotationsantrieb
- 30a-30e: Stromaufnahmeverläufe

- 100: Granulatkörner
- 102: Kornportion

- I: Stromaufnahme
- φ: Drehwinkel

- i-iv: Portionierzustände

## Patentansprüche

1. Verfahren zum Betreiben einer Portioniereinrichtung (10) für Granulat- oder Saatkörner (100), mit den Schritten:
- rotatorisches Antreiben eines Portionierelements (24) der Portioniereinrichtung (10) mittels eines Rotationsantriebs (28), wobei das Portionierelement (24) in einer Portionierkammer (18) angeordnet ist und durch eine Rotationsbewegung in der Portionierkammer (18) befindliche Granulat- oder Saatkörner (100) zu einer Kornportion (102) zusammenführt; und
- Auswerten des Antriebsmoments des Rotationsantriebs (28) oder eines mit dem Antriebsmoment des Rotationsantriebs (28) im Zusammenhang stehenden Parameters durch eine Auswerteeinrichtung zum Erfassen eines spezifischen Betriebszustands der Portioniereinrichtung (10);
**dadurch gekennzeichnet, dass** das Auswerten des Antriebsmoments des Rotationsantriebs (28) oder des mit dem Antriebsmoment des Rotationsantriebs (28) im Zusammenhang stehenden Parameters zum Erfassen der durch die Portioniereinrichtung (10) während eines Ausbringzeitraums portionierten Granulat- oder Saatgutmenge erfolgt.

2. Verfahren nach Anspruch 1,
**dadurch gekennzeichnet, dass** das Erfassen eines spezifischen Betriebszustands der Portioniereinrichtung (10) durch das Erfassen eines oder mehrerer Verlaufsmuster des Antriebsmoments des Rotationsantriebs (28) oder des mit dem Antriebsmoment des Rotationsantriebs (28) im Zusammenhang stehenden Parameters und/oder über das Erfassen einer oder mehrerer Grenzwertüber- und/oder -unterschreitungen des Antriebsmoments des Rotationsantriebs (28) oder des mit dem Antriebsmoment des Rotationsantriebs (28) im Zusammenhang stehenden Parameters erfolgt.

3. Verfahren nach Anspruch 1 oder 2,
**dadurch gekennzeichnet, dass** beim Auswerten des Antriebsmoments des Rotationsantriebs (28) oder des mit dem Antriebsmoment des Rotationsantriebs (28) im Zusammenhang stehenden Parameters ein Antriebsmomentenverlauf oder ein Parameterverlauf über einen Drehwinkelbereich, insbesondere über zumindest eine Umdrehung, des Portionierelements (24) mit einem Sollverlauf verglichen wird.

4. Verfahren nach einem der vorstehenden Ansprüche,
**dadurch gekennzeichnet, dass** das Auswerten des Antriebsmoments des Rotationsantriebs (28) oder des mit dem Antriebsmoment des Rotationsantriebs (28) im Zusammenhang stehenden Parameters zum Erfassen zumindest eines der folgenden spezifischen Betriebszustände der Portioniereinrichtung (10) erfolgt:
- einer Blockade des Portionierelements (24);
- einer Beeinträchtigung der Rotationsbewegung des Portionierelements (24).

5. Verfahren nach einem der vorstehenden Ansprüche,
**dadurch gekennzeichnet, dass** das Auswerten des Antriebsmoments des Rotationsantriebs (28) oder des mit dem Antriebsmoment des Rotationsantriebs (28) im Zusammenhang stehenden Parameters zum Erfassen des Verschmutzungszustands der Portionierkammer (18) erfolgt.

6. Verfahren nach einem der vorstehenden Ansprüche,
**dadurch gekennzeichnet, dass** das Auswerten des Antriebsmoments des Rotationsantriebs (28) oder des mit dem Antriebsmoment des Rotationsantriebs (28) im Zusammenhang stehenden Parameters zum Erfassen von Kornmengen der erzeugten Kornportionen (102) und/oder Portionsgrößen der erzeugten Kornportionen (102) erfolgt.

7. Verfahren nach einem der vorstehenden Ansprüche,
**gekennzeichnet durch** zumindest einen der folgenden Schritte:
- selbsttätiges Unterbrechen des Rotationsantriebs (28) des Portionierelements (24) durch eine Steuerungseinrichtung, wenn ein spezifischer Betriebszustand der Portioniereinrichtung (10) erfasst wird;
- selbsttätiges Veranlassen der Ausgabe eines akustischen oder optischen Hinweises durch eine Steuerungseinrichtung, wenn ein spezifischer Betriebszustand der Portioniereinrichtung (10) erfasst wird.

8. Verfahren nach einem der vorstehenden Ansprüche,
**dadurch gekennzeichnet, dass** das Auswerten des Antriebsmoments des Rotationsantriebs (28) oder des mit dem Antriebsmoment des Rotationsantriebs (28) im Zusammenhang stehenden Parameters zum Ermitteln von Abgabezeitpunkten erzeugter Kornportionen (102) und/oder einer verbleibenden Förderdauer der erzeugten Kornportionen (102) bis zur Ablage auf eine landwirtschaftliche Nutzfläche erfolgt.

9. Verfahren nach einem der vorstehenden Ansprüche,
**dadurch gekennzeichnet, dass** zumindest ein Kalibriervorgang, bei dem keine Granulat- oder Saatkörner (100) in die Portionierkammer (18) eingespeist und somit nicht mittels des Portionierelementes (24) zu einer Kornportion zusammengeführt werden, durchgeführt wird.

10. Verfahren nach einem der vorstehenden Ansprüche,
**dadurch gekennzeichnet, dass** der Rotationsantrieb (28) ein elektrischer Rotationsantrieb ist und der zum Erfassen eines spezifischen Betriebszustands der Portioniereinrichtung (10) ausgewertete und mit dem Antriebsmoment des Rotationsantriebs im Zusammenhang stehende Parameter die Stromaufnahme (I) des Rotationsantriebs (28) ist.

11. Portioniereinrichtung (10) für Granulat- oder Saatkörner (100), mit
- einem Portionierelement (24), welches in einer Portionierkammer (18) eines Gehäuses (12) der Portioniereinrichtung (10) angeordnet und dazu eingerichtet ist, durch eine Rotationsbewegung in der Portionierkammer (18) befindliche Granulat- oder Saatkörner (100) zu einer Kornportion (102) zusammenzuführen;
- einem Rotationsantrieb (28), welcher dazu eingerichtet ist, das Portionierelement (24) rotatorisch anzutreiben; und
- einer Auswerteeinrichtung, welche dazu eingerichtet ist, das Antriebsmoment des Rotationsantriebs oder einen mit dem Antriebsmoment des Rotationsantriebs (28) im Zusammenhang stehenden Parameter zum Erfassen eines spezifischen Betriebszustands der Portioniereinrichtung (10) auszuwerten;
**dadurch gekennzeichnet, dass** die Auswerteeinrichtung dazu eingerichtet ist, das Antriebsmoment des Rotationsantriebs (28) oder den mit dem Antriebsmoment des Rotationsantriebs (28) im Zusammenhang stehenden Parameter zum Erfassen der durch die Portioniereinrichtung (10) während eines Ausbringzeitraums portionierten Granulat- oder Saatgutmenge auszuwerten.

12. Portioniereinrichtung (10) nach Anspruch 11,
**dadurch gekennzeichnet, dass** der Rotationsantrieb (28) ein elektrischer Rotationsantrieb ist und die Auswerteeinrichtung dazu eingerichtet ist, die Stromaufnahme (I) des Rotationsantriebs (28) zum Erfassen eines spezifischen Betriebszustands der Portioniereinrichtung (10) auszuwerten.

13. Portioniereinrichtung (10) nach Anspruch 11 oder 12,
**dadurch gekennzeichnet, dass** die Portioniereinrichtung (10) dazu eingerichtet ist, gemäß dem Verfahren nach einem der Ansprüche 1 bis 10 betrieben zu werden.

14. Landmaschine, mit
- einer oder mehreren Portioniereinrichtungen (10) für Granulat- oder Saatkörner (100);
**dadurch gekennzeichnet, dass** eine, mehrere oder sämtliche Portioniereinrichtungen (10) nach einem der Ansprüche 11 bis 13 ausgebildet sind und/oder dazu eingerichtet sind, gemäß dem Verfahren nach einem der Ansprüche 1 bis 10 betrieben zu werden.

## Claims

1. Method for operating a portioning device (10) for granules or seeds (100), comprising the steps of:
- rotary driving of a portioning element (24) of the portioning device (10) by means of a rotary drive (28), the portioning element (24) being arranged in a portioning chamber (18) and, by means of a rotary movement, combining granules or seeds (100) located in the portioning chamber (18) to form a grain portion (102); and
- evaluating the drive torque of the rotary drive (28) or a parameter related to the drive torque of the rotary drive (28) by an evaluation device in order to detect a specific operating state of the portioning device (10);
**characterized in that** the drive torque of the rotary drive (28) or the parameter related to the drive torque of the rotary drive (28) is evaluated in order to detect the quantity of granules or seed portioned by the portioning device (10) during an application period.

2. Method according to claim 1,
**characterized in that** a specific operating state of the portioning device (10) is detected by detecting one or more curve patterns of the drive torque of the rotary drive (28) or the parameter related to the drive torque of the rotary drive (28), and/or by detecting one or more instances of the drive torque of the rotary drive (28) or the parameter related to the drive torque of the rotary drive (28) exceeding and/or failing to meet a limit value.

3. Method according to claim 1 or 2,
**characterized in that,** when evaluating the drive torque of the rotary drive (28) or the parameter associated with the drive torque of the rotary drive (28), a drive torque curve or a parameter curve over a rotation angle range, in particular over at least one revolution, of the portioning element (24) is compared with a target curve.

4. Method according to any of the preceding claims,
**characterized in that** the drive torque of the rotary drive (28) or the parameter related to the drive torque of the rotary drive (28) is evaluated in order to detect at least one of the following specific operating states of the portioning device (10):
- a blockage of the portioning element (24);
- an impairment of the rotational movement of the portioning element (24).

5. Method according to any of the preceding claims,
**characterized in that** the drive torque of the rotary drive (28) or the parameter related to the drive torque of the rotary drive (28) is evaluated in order to detect the state of contamination of the portioning chamber (18).

6. Method according to any of the preceding claims,
**characterized in that** the drive torque of the rotary drive (28) or the parameter related to the drive torque of the rotary drive (28) is evaluated in order to determine grain quantities of the produced grain portions (102) and/or portion sizes of the produced grain portions (102).

7. Method according to any of the preceding claims,
**characterized by** at least one of the following steps:
- automatic interruption of the rotary drive (28) of the portioning element (24) by a control device when a specific operating state of the portioning device (10) is detected;
- automatic initiation of the output of an acoustic or visual indication by a control device when a specific operating state of the portioning device (10) is detected.

8. Method according to any of the preceding claims,
**characterized in that** the drive torque of the rotary drive (28) or the parameter related to the drive torque of the rotary drive (28) is evaluated in order to determine the delivery times of produced grain portions (102) and/or a remaining conveying duration of the produced grain portions (102) until they are deposited on an agricultural area.

9. Method according to any of the preceding claims,
**characterized in that** at least one calibration process is carried out in which no granules or seeds (100) are fed into the portioning chamber (18) and thus are not combined to form a grain portion by means of the portioning element (24).

10. Method according to any of the preceding claims,
**characterized in that** the rotary drive (28) is an electric rotary drive and the parameter evaluated in order to detect a specific operating state of the portioning device (10) and related to the drive torque of the rotary drive is the power consumption (I) of the rotary drive (28).

11. Portioning device (10) for granules or seeds (100), comprising
- a portioning element (24) which is arranged in a portioning chamber (18) of a housing (12) of the portioning device (10) and is designed to combine granules or seeds (100) located in the portioning chamber (18) to form a grain portion (102) by means of a rotational movement;
- a rotary drive (28) which is designed to drive the portioning element (24) in a rotary manner; and
- an evaluation device which is designed to evaluate the drive torque of the rotary drive or a parameter related to the drive torque of the rotary drive (28) in order to detect a specific operating state of the portioning device (10);
**characterized in that** the evaluation device is designed to evaluate the drive torque of the rotary drive (28) or the parameter related to the drive torque of the rotary drive (28) in order to detect the quantity of granules or seed portioned by the portioning device (10) during an application period.

12. Portioning device (10) according to claim 11,
**characterized in that** the rotary drive (28) is an electric rotary drive and the evaluation device is designed to evaluate the current consumption (I) of the rotary drive (28) in order to detect a specific operating state of the portioning device (10).

13. Portioning device (10) according to claim 11 or 12,
**characterized in that** the portioning device (10) is designed to be operated in accordance with the method according to any of claims 1 to 10.

14. Agricultural machine, comprising
- one or more portioning devices (10) for granules or seeds (100);
**characterized in that** one, a plurality of, or all portioning devices (10) are designed according to any of claims 11 to 13 and/or are designed to be operated in accordance with the method according to any of claims 1 to 10.

## Revendications

1. Procédé permettant de faire fonctionner un dispositif de mise en portions (10) pour des granulés ou des graines (100), comportant les étapes consistant à :
- entraîner en rotation un élément de mise en portions (24) du dispositif de mise en portions (10) au moyen d'un entraînement en rotation (28), dans lequel l'élément de mise en portions (24) est disposé dans une chambre de mise en portions (18) et réunit, par un mouvement de rotation, des granulés ou des graines (100) se trouvant dans la chambre de mise en portions (18) en une portion de grains (102) ; et
- évaluer le couple d'entraînement de l'entraînement en rotation (28) ou un paramètre en relation avec le couple d'entraînement de l'entraînement en rotation (28) par un dispositif d'évaluation permettant de détecter un état de fonctionnement spécifique du dispositif de mise en portions (10) ;
**caractérisé en ce que** l'évaluation du couple d'entraînement de l'entraînement en rotation (28) ou du paramètre en relation avec le couple d'entraînement de l'entraînement en rotation (28) est effectuée pour détecter la quantité de granulés ou de graines mise en portions par le dispositif de mise en portions (10) pendant une période d'épandage.

2. Procédé selon la revendication 1,
**caractérisé en ce que** la détection d'un état de fonctionnement spécifique du dispositif de mise en portions (10) est effectuée par la détection d'un ou de plusieurs modèles d'évolution du couple d'entraînement de l'entraînement en rotation (28) ou du paramètre en rapport avec le couple d'entraînement de l'entraînement en rotation (28) et/ou par l'intermédiaire de la détection d'un ou de plusieurs dépassements vers le haut et/ou vers le bas de valeurs limites du couple d'entraînement de l'entraînement en rotation (28) ou du paramètre en relation avec le couple d'entraînement de l'entraînement en rotation (28).

3. Procédé selon la revendication 1 ou 2,
**caractérisé en ce que**, lors de l'évaluation du couple d'entraînement de l'entraînement en rotation (28) ou du paramètre en relation avec le couple d'entraînement de l'entraînement en rotation (28), une évolution de couple d'entraînement ou une évolution de paramètre est comparée à une évolution de consigne sur une plage d'angles de rotation, en particulier sur au moins une rotation, de l'élément de mise en portions (24).

4. Procédé selon l'une des revendications précédentes,
**caractérisé en ce que** l'évaluation du couple d'entraînement de l'entraînement en rotation (28) ou du paramètre en relation avec le couple d'entraînement de l'entraînement en rotation (28) est effectuée pour détecter au moins l'un des états de fonctionnement spécifiques suivants du dispositif de mise en portions (10) :
- un blocage de l'élément de mise en portions (24) ;
- une altération du mouvement de rotation de l'élément de mise en portions (24).

5. Procédé selon l'une des revendications précédentes,
**caractérisé en ce que** l'évaluation du couple d'entraînement de l'entraînement en rotation (28) ou du paramètre en relation avec le couple d'entraînement de l'entraînement en rotation (28) est effectuée pour détecter l'état d'encrassement de la chambre de mise en portions (18).

6. Procédé selon l'une des revendications précédentes,
**caractérisé en ce que** l'évaluation du couple d'entraînement de l'entraînement en rotation (28) ou du paramètre en relation avec le couple d'entraînement de l'entraînement en rotation (28) est effectuée pour détecter des quantités de grains des portions de grains (102) produites et/ou des tailles de portions des portions de grains (102) produites.

7. Procédé selon l'une des revendications précédentes,
**caractérisé par** au moins l'une des étapes suivantes :
- interruption automatique de l'entraînement en rotation (28) de l'élément de mise en portions (24) par un dispositif de commande lorsqu'un état de fonctionnement spécifique du dispositif de mise en portions (10) est détecté ;
- déclenchement automatique de l'émission d'une indication acoustique ou optique par un dispositif de commande lorsqu'un état de fonctionnement spécifique du dispositif de mise en portions (10) est détecté.

8. Procédé selon l'une des revendications précédentes,
**caractérisé en ce que** l'évaluation du couple d'entraînement de l'entraînement en rotation (28) ou du paramètre en relation avec le couple d'entraînement de l'entraînement en rotation (28) est effectuée pour déterminer des moments d'épandage de portions de grains (102) produites et/ou une durée de transport restante des portions de grains (102) produites jusqu'à leur dépôt sur une surface agricole utile.

9. Procédé selon l'une des revendications précédentes,
**caractérisé en ce qu'au** moins une opération de calibrage, au cours de laquelle aucun granulé ou graine (100) n'est alimenté dans la chambre de mise en portions (18) et n'est donc pas réuni en une portion de grains au moyen de l'élément de mise en portions (24), est réalisée.

10. Procédé selon l'une des revendications précédentes,
**caractérisé en ce que** l'entraînement en rotation (28) est un entraînement en rotation électrique et le paramètre évalué pour la détection d'un état de fonctionnement spécifique du dispositif de mise en portions (10) et en relation avec le couple d'entraînement de l'entraînement en rotation est la consommation de courant (I) de l'entraînement en rotation (28).

11. Dispositif de mise en portions (10) pour des granulés ou des graines (100), comportant
- un élément de mise en portions (24) qui est disposé dans une chambre de mise en portions (18) d'un boîtier (12) du dispositif de mise en portions (10) et qui est conçu pour réunir, par un mouvement de rotation, des granulés ou des graines (100) se trouvant dans la chambre de mise en portions (18) en une portion de grains (102) ;
- un entraînement en rotation (28) qui est conçu pour entraîner en rotation l'élément de mise en portions (24) ; et
- un dispositif d'évaluation qui est configuré pour évaluer le couple d'entraînement de l'entraînement en rotation ou un paramètre en relation avec le couple d'entraînement de l'entraînement en rotation (28) pour détecter un état de fonctionnement spécifique du dispositif de mise en portions (10) ;
**caractérisé en ce que** le dispositif d'évaluation est configuré pour évaluer le couple d'entraînement de l'entraînement en rotation (28) ou le paramètre en relation avec le couple d'entraînement de l'entraînement en rotation (28) pour détecter la quantité de granulés ou de graines mise en portions par le dispositif de mise en portions (10) pendant une période d'épandage.

12. Dispositif de mise en portions (10) selon la revendication 11,
**caractérisé en ce que** l'entraînement en rotation (28) est un entraînement en rotation électrique et le dispositif d'évaluation est configuré pour évaluer la consommation de courant (I) de l'entraînement en rotation (28) pour détecter un état de fonctionnement spécifique du dispositif de mise en portions (10).

13. Dispositif de mise en portions (10) selon la revendication 11 ou 12,
**caractérisé en ce que** le dispositif de mise en portions (10) est conçu pour fonctionner conformément au procédé selon l'une des revendications 1 à 10.

14. Machine agricole, comportant
- un ou plusieurs dispositifs de mise en portions (10) pour des granulés ou des graines (100) ;
**caractérisé en ce qu'**un, plusieurs ou tous les dispositifs de mise en portions (10) sont réalisés selon l'une des revendications 11 à 13 et/ou sont conçus pour fonctionner conformément au procédé selon l'une des revendications 1 à 10.
